Europäisches Patentamt

European Patent Office

Office européen des brevets

(11) Publication number: **0 323 208 B1**

# EUROPEAN PATENT SPECIFICATION

(45) Date of publication of patent specification: **26.02.92**    (51) Int. Cl.⁵: **B60C 15/024**, B60C 15/00

(21) Application number: **88312340.8**

(22) Date of filing: **28.12.88**

(54) **Heavy duty radial tyre.**

(30) Priority: **29.12.87 JP 332262/87**
**16.08.88 JP 204513/88**

(43) Date of publication of application:
**05.07.89 Bulletin 89/27**

(45) Publication of the grant of the patent:
**26.02.92 Bulletin 92/09**

(84) Designated Contracting States:
**DE FR GB**

(56) References cited:
**EP-A- 0 124 617**
**FR-A- 2 383 030**
**FR-A- 2 385 546**
**FR-A- 2 483 854**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Ueyoko, Kiyoshi**
**10-2 Fukaeminami 2-chome**
**Higashinari-ku Osaka-shi Osaka-fu(JP)**
Inventor: **Mizukoshi, Yasuyoshi**
**9-128, Wakabayashi-higashi-cho Oone**
**Toyota-shi Aichi-ken(JP)**
Inventor: **Ikeda, Kazushige**
**5-23-4, Ryugaoka**
**Nishi-ku Kobe-shi Hyogo-ken(JP)**
Inventor: **Yamada, Munemitsu**
**134-9, Ookubo-cho Taniyagi**
**Akashi-shi Hyogo-ken(JP)**

(74) Representative: **Stewart, Charles Geoffrey**
**SP TYRES UK LIMITED Tyre Technical Division**
**Fort Dunlop Birmingham B24 9OT(GB)**

Rank Xerox (UK) Business Services

## Description

The present invention relates to a radial ply tyre for heavy duty use suitable for aircraft. Heavy duty radial tyres for aircraft are used at heavy loads and high speeds and therefore such tyres should essentially resist repeated large deformations, heavy loads and high speed for the sake of safe take-off and landing.

Because of the recent increases in aircraft size and increase of take off speed, tyres must be designed so as to endure still greater speeds and loads at take-off and landing as well as repeated large radial deflections up to, for example, 28 to 35%.

Today the widely used tyres for aircraft are of cross ply structure. In such tyres however, the stiffness at the tread is low and the tyre weight is high and hence neither good wear nor desirable cooling properties are obtained.

Because of the rapid enhancement of performance in large-sized jet planes, there is a limitation to the use of such ply structure tyres.

Accordingly, there is a tendency to employ radial ply tyres having a belt layer composed of high modulus belt cords arranged radially outside the carcass at a small angle with regard to the tyre equator.

By employing such radial ply structures for heavy duty aircraft tyres, the tyre life has been extended. However, it has been found that the durability of the bead portions is too low in comparison with that of the whole tyre.

It is therefore a general object of the present invention to provide a heavy duty radial ply tyre improved in bead durability.

Looking to the bead region in particular the deflection or deformation when loaded is significantly large because of the action of heavy load in comparison with the tyres in other fields, for example, those for passenger cars. Accordingly, the sidewall portions and the bead portions become subjected to very severe deformation.

The result of this is that the bead apex of a comparatively hard rubber develops heat by deformation and such an apex is disposed in each bead region. Thus the temperature of the bead apex rises due to the heat generated by the repeated deformation during the operations of takeoff and landing.

Moreover, large number of reinforcement layers such as carcass plies, bead reinforcing plies, etc are placed in the bead portions, and accordingly, the thickness thereof is large. Therefore, when the bead portion is subjected to bending deformation, a large shear strain is produced between adjacent plies, which induces breakages in the tyre bead portion.

It is therefore another object of the present invention to provide a heavy duty radial ply tyre in which, in order to prevent breakages of the tyre bead portions a reduction in both the heat generation and the shear strain in the bead apex is obtained.

On the other hand, it is known that breakage of the bead often appears near the radially outer edge of the rim flange. This is explained as follows:

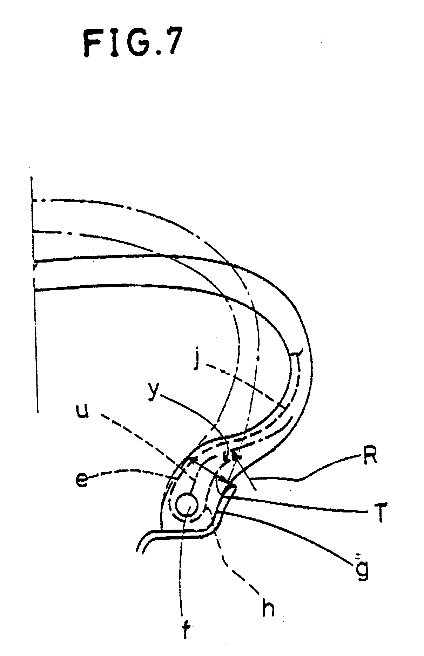

When the deflection in the radial direction of the tyre while loaded is as large as 28 to 35% as stated above, and as shown roughly in Fig.7 a tensile force is generated in the axially inside liner portion of the carcass (e) and generally the main portion (j) of the carcass, and in contrast therewith, a compressive stress is applied to the outside portion thereof in the turnup portion (h) around the bead core (f).

When the bead portion is sharply folded over the rim flange (g), the compressive stress concentrates to build up a large compression at the carcass placed in the folded portion, and such stress is repeated during each rotation. Accordingly, the ply cords are fatigued and finally broken. Furthermore, the broken ends give rise to local concentrations of compressive stress. Such repeated compressive stresses lead to failures in the bead.

In conventional tyres, the bead apex is designed to be thicker and taller in order to lessen the elastic deformation of the bead portion, and the distance between the turnup portion (h) and the main portion (j) of the carcass (e) is accordingly increased, but this increases the above mentioned compressive stress.

The inventors discovered that in order to reduce the compressive stress at the carcass turnup portion (h) it is necessary to bring the radially outer edge close to the neutral line U in the bending of the bead portion.

To explain further in detail assuming the deformation of the bead is constant under the conditions of high pressure and heavy load, the strain E of the carcass is expressed in the following equation.

$$E = Y/R \qquad (1)$$

where

R: radius of curvature of the carcass and
y: distance from the netural line U in bending to the outside of the turnup portion of the carcass.

That is, the strain E of the carcass becomes smaller as the distance y is shorter, if it is assumed that R is substantially constant.

On the other hand, the fact that the deformation is not inform depending on the strength of the carcass (e) yields the following equation.

$$R = EI/M \qquad 2$$

where
E: Young's modulus
I: moment of inertia of area
M: bending moment applied at the bead

In addition since the moment of inertia of area I and the thickness T of the bead have the relation

$$I \propto T^3 \qquad (3)$$

equations (1), (2) and (3) reduce the relation

$$E = Y/R = \frac{y}{EI/M} = k \frac{yM}{E \ T^3}$$

k: a constant

The inventors discovered that the strain E can be minimised by moving the axial outside of the carcass turnup portion of the above mentioned neutral line U and contacting the carcass turnup portion (h) with the carcass main portion (j) and further by reducing the quantity of rubber in the triangular sectional region between the turnup portion and main portion of the carcass by making the bead apex smaller.

From FR-A-2483854 is known a heavy duty radial tyre comprising a pair of bead cores one disposed in each bead portion of the tyre, a carcass extending between and turned up around both bead cores from the axially inside to the outside thereof, the carcass comprising at least one ply of parallel cords arranged in a substantially radial direction to the equatorial plane of the tyre a belt disposed radially outwardly of the carcass and comprising at least two plies of cords, a pair of bead apexes one disposed and extending radially outwardly of each bead core, wherein, in at least one of the bead portions when the tyre is mounted on a normal rim as specified and inflated to normal pressure the ratio X/HR of the axial distance X of the axially inner edge (Q2) of the bead core from a bead heel point to the height HR of the flange of said normal rim is smaller than 1.0, wherein said bead heel point is defined as the intersection of an extension of the outer flange contacting surface of the bead portion with an extension of the bead base. The above mentioned objects are achieved by the features recited in claim 1.

An embodiment of the present invention will now be described in detail with reference to the accompanying drawings in which:-

Fig.. is a sketch showing a right half section of an embodiment of the present invention

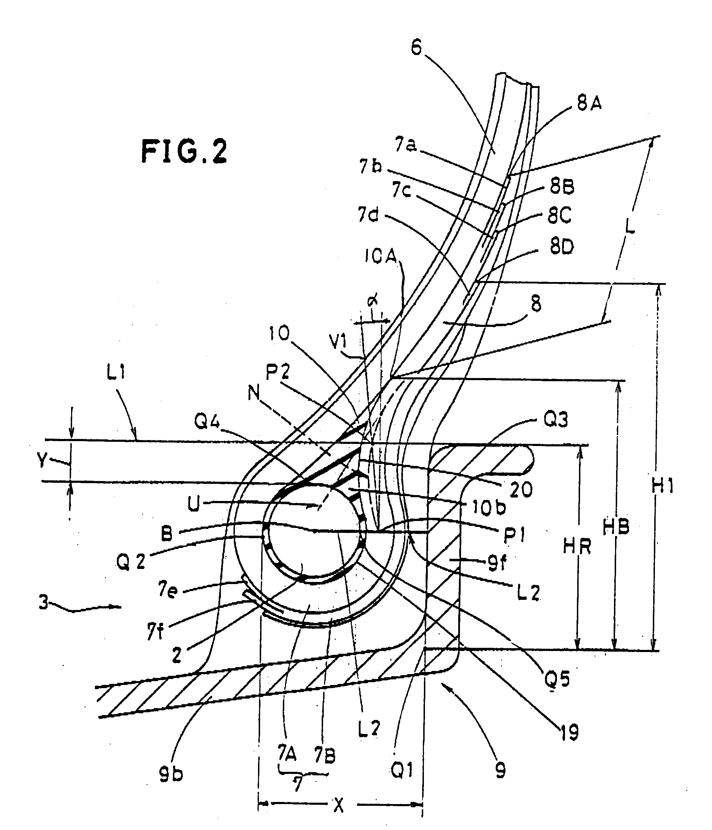

Fig.2. is a enlarged sectional view showing the bead portion thereof

Fig.3 is a graph showing the characteristics of organic fibre cords used as the carcass cords

Fig.4. is a sectional part view showing the adjacent two carcass plies

Fig.5. is a graph showing the relation ship between the temperature of bead apex and the X/HR

Fig.6. is a graph showing the relationship between the number of tests (bead durability) and X/HR and

Fig.7 is a sketch showing the deformation of the tyre when loaded

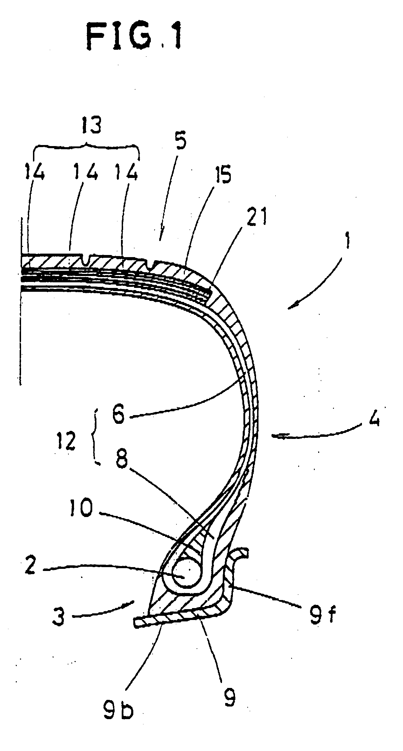

In the drawings (Fig.1) a heavy duty aircraft tyre radial ply tyre 1 a pair of beads 3 and tread 5, and a pair of sidewalls 4 one extending from each edge of the tread 5 to the bead 3. The tyre 1 is mounted on a normal rim 9 specified for the tyre 1 and inflated to a normal inner pressure.

The tyre 1 further comprises a pair of bead cores 2 one disposed in each bead 3, a carcass 7 extending around the tyres between the beads 3, a belt 13 disposed between the tread 5 and the carcass 7 and a pair of apexes 10 disposed radially outwardly of their respective bead cores 2.

The rim 9 includes a pair of flanges 9F extending radially outwardly from the rim base 9b.

The carcass 7 comprises at least one ply of parallel cords 12 arranged at angles of 75 to 95 degrees to the equatorial plane of the tyre, and turned up in both ends portions around the bead cores 2 from the axially inside to the outside thereof to be secured thereto.

For the carcass ply cords 12, preferably organic fibre cords such as nylon, rayon, aromatic polyamide and/or the like. However, metal cords may be used therefor.

The belt 13 comprises at least two plies of cords located radially outside the carcass crown, and for the belt cords, the same material as that of the carcass ply cords is used although other materials may be used.

The bead apex 10 is disposed between the turnup portion and main portion 6 of the carcass, and its sectional shape is substantially a triangle that is, the bead apex extends taperingly from the bead core 2 radially outwardly thereof toward the sidewall region 4.

Incidentally, the sectional shape of the bead core 2 can be formed in a hexagon, a circle a rectangle etc.

The carcass 7 comprises an inner layer 7A turned up in both the edge portions around the bead core 2 from the axially inside to the outside thereof and an outer layer 7B extending in both the edge portions along the axially outside of the turnup portion 8 of the inner layer. Each layer is composed of plural plies of carcass cords, for example, the inner layer is four plies 7A, 7B, 7C and 7D and the outer layer in two plies 7E and 7F.

The carcass cords 12 are made of organic fibres and are arranged radially at 75 to 90 degrees with respect to the equator of the tyre.

Furthermore, between the carcass ply 7a and the bead wire of the bead core 2 there is disposed a thin bead chafer 19 made of hard rubber to prevent wear of the carcass which moves around the bead core 2 like a belt on a pulley when subjected to the repeated deformation of the tyre.

When the tyre 1 is mounted on its rim 9, the rim flange 9f extends radially outwardly from the rim base 9b along the outside of the tyre bead 3 and reference HR indicates the radially outward extend thereof, that is, the flange height which is defined as the radial distance measured from the bead base line to the radially outer end Q3 of the rim flange 9F.

In the bead region when the tyre is loaded, the axially outwardly bending deformation is generated mainly in the part radially outside the radially outer end Q3 of the rim flange 9F as shown in Fig.7. and in the prior art tyres, by such repeated deformation, the heat was generated mainly from the rubber of the bead apex. It is therefore possible to reduce the deformation and the heat generation by preliminarily forming the bead apex 10 in a similar shape to the deformed shape by the load.

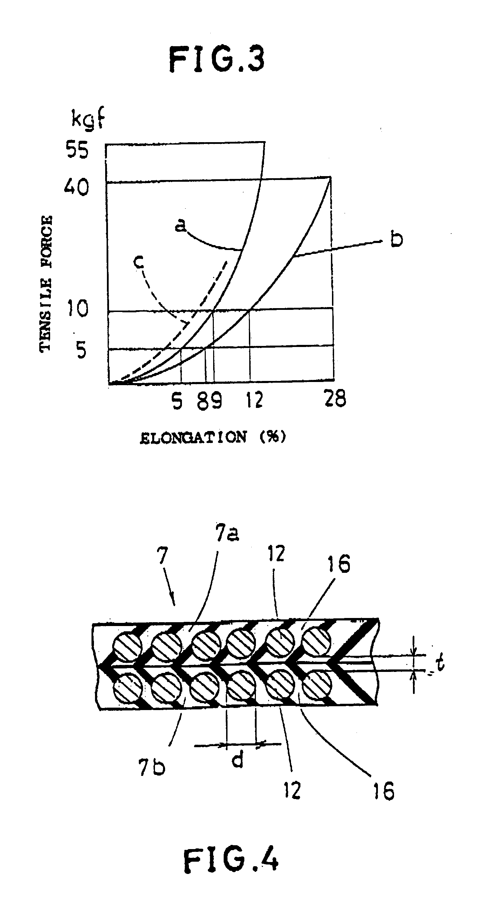

For that, in each bead region of the tyre, as shown in Fig.3, the bead shape is defined by the ratio X/HR of the axial distance X of the inner end Q2 of the bead core 2 from the bead heel point Q1, to the flange height HR should be in a range not less than 0.8 and not more than 1.05, where the bead heel point Q1 is defined as the intersection of the line extending from the inner surface of the rim flange 9f to the radially outer end Q4 of the bead core being located radially inward of the radially outer end Q3 of the rim flange 9F and the ratio Y/HR of the radial distance Y between the radially outer end Q4 of the bead core and the radially outer end Q3 of the rim flange 9f, to the flange height HR being set to be not less than 0 and not more than 0.3.

Further, on a line drawn radially outwardly from the centre of gravity B of the bead core in its section at a right angle to the axial direction of the tyre a diameter D1 at the radially inner end of the bead core, a diameter D2 at the rim base or the bead seat of the rim, and a diameter D3 at the bead base of the tyre demounted from the rim satisfy the following relation.

$$(D1-D3)/(D1-D2) = 1.15 \text{ to } 1.31$$

That is, on the line drawn radially outwardly from the centre of gravity B of the bead core 2 in its section at a right angle to the axial direction of the tyre, the distance of the bead base from the radially inner end of the bead core when the tyre is dismounted from the rim, is in the range of 115 to 131% of the distance of the rim base from the radially inner end of the bead core when the tyre is mounted on the rim.

The bead core 2 is, meanwhile, formed in a circular sectional shape.

Further, the bead apex 10 fills the triangular space formed by the bead core 2, the carcass main portion 8 and the carcass turnup portion 8, and accordingly, it has a triangular section extending taperingly.

The bead apex is made of a relatively hard rubber with a JIS A hardness of 65 to 90.

The radial height HB of the radially outer end 10A of the bead apex 10 is larger than the flange height HR of the rim flange.

As far as the relative position of the bead core 2 to the rim 9 is concerned this determines the approximate shape of the main port 10b of the bead apex where deformation and heating by load deformation causes problems. In the present invention, by setting the ratios X/HR and Y/HR in the bead core 2 in the ranges stated above, the shape is preliminarily formed similar to that in the loaded state, that is, the difference between the loaded shape and unloaded shape becomes decreased, and thus the heat generation is lessened.

If the ratio X/HR is less than 0.80, the required low deformation and low heat generation is not obtained.

When the ratio X/HR is larger than 1.05, the volume of the bead portion 3 becomes excessively large, and the bead core 2 departs from the rim flange too far so as to bring about adverse effects on the durability and the bead seating, and further the production of such a tyre becomes difficult. Therefore, the ratio X/HR is in the range of 0.80 to 1.05, and more preferably not more than 1.0

Further, if the ratio Y/HR exceeds 0.30, the object of this invention is not fully attained If it is less than 0, that is, if the radially outer end Q4 of the bead core 2 is located radially outside the outer end Q3 of the rim flange 9f, the bending of the carcass is concentrated around the outer end Q4, which leads to breakage of the carcass 7 itself.

If the ratio (D1-D3/(D1-D2) becomes smaller than 1.15 it becomes difficult to improve the bead durability. If the ratio is more than 1.31, it becomes hard to mount the tyre on its normal rim.

In this way, by reducing the deformation of the bead apex 10 when loaded, the heat generation of the bead apex which of necessity must use rubber with a high heat generating property, can be reduced, and it becomes possible to reduce the temperature rise in the bead region while travelling and also it becomes possible to decrease the shear strain caused between the reinforcement plies. As a result, the structural durability of the bead is improved.

In the turnup portion 3 of the inner layer 7A of the carcass in this embodiment, the carcass plies 7A, 7b, 7c and 7d are arranged axially outwardly in that order, and the outer the ply, the height of the radially outer end (8a, 8B, 8C, 8D) is lower. That is, in the adjacent two plies, the height of the inner ply is higher than that of the outer ply.

Furthermore the turnup portion 8 and the main portion 6 of the inner layer of the carcass contact each other from the outer end of the turnup portion 8 or the outer end 8A of the highest turnup portion of the ply 7a towards the radially inside thereof in a range L, and the radially outer ends 8B, 8C, 8D, of the outer carcass plies 7b, 7c and 7d are termined in this range L.

The height H1 of the lowest turnup portion of the carcass ply 7d is higher than the height HB of the tip 10A of the bead apex 10.

Accordingly, in this example the outer end 10A of the bead apex 10 is located in the range between the heights of the outer end Q3 of the rim flange and the outer end 8D of the lowest turnup oortion of the carcass ply.

As explained above, by making the radial height HB of the tip 10A of the bead apex 10 in the specific range while forming the turnup portion 8 of the carcass in the specific structure, the strain produced by the deformation on the turnup portion 8 is mitigated and separation starting from the end of the turnup portion is prevented.

Further, in this embodiment, the bead apex 10 is provided on the axially outside thereof with a concave surface 20, and the bottom 20 of the concave surface is positioned axially inside the axially outer end Q5 of the bead core 2.

Accordingly, the turnup portion 8 of the inner later 7A of the carcass 7 along the axially outerside of the bead apex, is curved similarly to the concave surface 20.

The centre line N of the turnup portion 8 passing through the centre of the thickness thereof is located axially inwards of a line segment P1-P2 drawn straight between points P1 and P2, where the point P1 is the intersection of then centre line N with a straight line L2 passing through the centre of gravity B of the bead core 2 in the axial direction of the tyre and the point P2 is the intersection of a line L1 passing through the outer end Q3 of the rim flange with a line V1 passing through the point P1 and inclined axially inwardly at an angle (alfa) between 0 to 20 degrees with respoect to the radial direction of the tyre.

As a consequence,in the turnup porton 8 of the carcass 7 between the intersection P1 and P2, the centre line N approaches the neutral line U in bending of the bead 3, and this leads to a decrease of the strain caused by the deformation of the carcass especially the compressive stress generated in the axially outer side of the carcass, thereby improving the resistance to fatigue of the carcass.

The carcass cord 12 in this embodiment is made of organic fibres and the cord has the physical characteristics that the elongation when 5 kgf tensile force is applied is 5 to 8%, the elongation when 10 kgf tensile force is applied is 9 to 12% the elongation at breakage is not more than 28% and the tensile strength is 140 to 170 kgf/sq.mm.

The carcass cord is relatively thin, and the diameter thereof is not more than 1.2mm.

The above mentioned limitations to the cord elongation mean that this characteristics is defined in teh specific range between the curved lines-(a and b) in Fig.3.

Incidentially, as shown by the lines a and b in Fig.3, an organic fibre cord has such as characteristic that the rate of change of elongation decreases as the load increases, and the modulus of elasticity at the elongation of 6 to 7% is referred as ainitial modulus of elasticity. Further, the cord which gave the curve (a) was broken at about 55kgf tensile force, and the cord which gave the curve (b) was broken at about 40 kgf tensile force, thst is, the cord strength of each cord is 55kgf, respectively. As known from the values above elastic cord has 10 to 11% elongation when loaded by 18 to 25% of the cord sdtrength. A conventionally cord presented curve (c).

For such organic fibre cord, nylon, polyester aliphatic polyamide, and carbon can be used, but among them, aliphatic polyamide can satisfy the above characetrsistics most sufficiently.

Besides, in the pretreatment process in which tension and heat are applied to the cord for a specific period of time, by reducing the tension widely from the tension conventionally applied, the cord having the above mentioned characteristics can be obtained.

It was confirmed that, by using such cords as having the above mentioned elastic property it became possible to give the carcass cord a elongation of not less than 6% more preferably 8 to 9 which is larger than in the conventional tyre when inflated to its normal pressure.

In this way, as the carcass cords have an elongation of not less than 6% more preferably 8 to 9% when inflated to normal pressure, the compressive stress acting on the carcass cords on the rim flange side when the bead portion is bent at the time of takeoff or landing of an aircraft is reduced. Accordingly, the compressive strain, deformation, local folding and breakages caused by the fatigue can be prevented.

Furthermore, the compressive stress on the bead rubber itself can be alleviated which improves the durability of the nead portion 3.

The organic fibre cords 12 are coated with rubber to form the carcass plies. For the coating rubber high modulus rubber with a superior durability having a JIS A hardness of 60 to 90 a 100% modulus of 30 to 100 khf/sq.cm a tensile strength of 1509 to 300 kgf/sq,mm and an elongation at breakage of 300 to 600% is used. The thickness t of the rubber coat is set to be not more than 0.8mm. Such a rubber coat facilies the above mentioned eloongation of the carcass cords when inflated, anf further the large elongation at breake improves the durability of the bead portion.

The belt 13 in this embodiment is composed of four plies 14 of rubberised cords having substantially same characteristics as those of the carcass cord. The belt cords 21 are inclined at 0 to 20 degress to the tyre equator and embedded in rubber.

Radial ply aircraft tyres of size 46X17R20 were manufactured as test samples. The tyres were identical except for the axial distance X of the bead core from the flange contacting surface. Nylon cords were used for the carcass cords and belt cords, and the radial distance Y was set at 15mm.

Each tyre was mounted on a normal rim of size 49X17 and inflated to a normal pressure of 14.8 kg/sq.cm, and then by using an indoor bench tester, the tyre was repeatedly subjected to an acceleration test to increase the speed from 0 to 363 km/h in a period of 55 seconds while loaded with 21,000 kg.

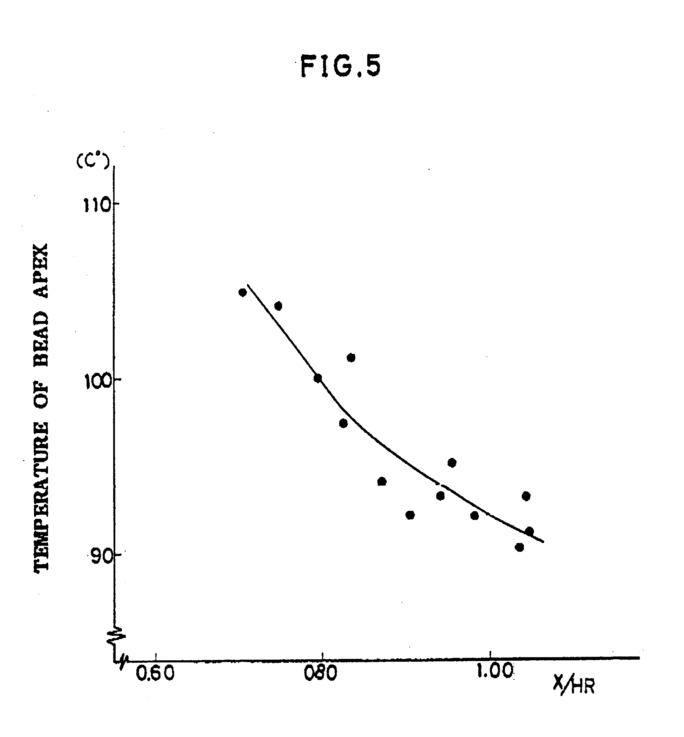

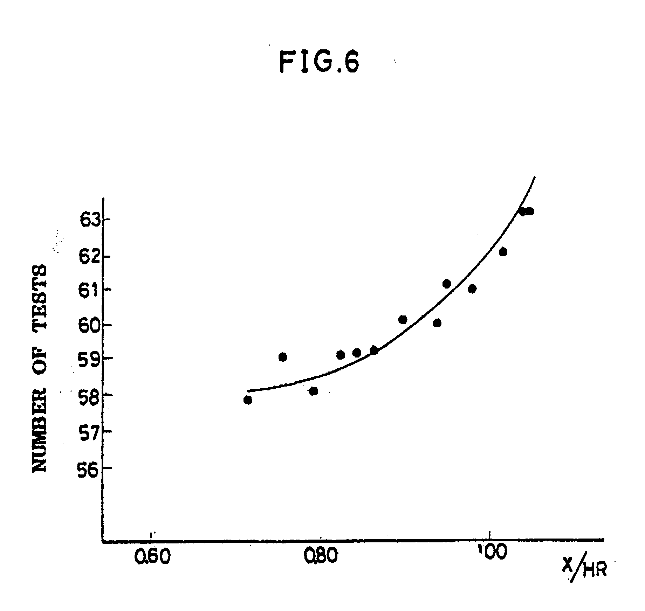

The test results are shown in Figs.5 and 6.

From Fig.5 in which the axis of the ordinates gives the temperature in the bead apex measured immediately after the tenth successive acceleration test and the axis of the abcissa denotes the ratio X/HR, it is apparent that the temperature decreases as the ratio X/HR increases and when the ratio X/HR becomes about 0.80, the temperature becomes 100 degrees centigrade.

In Fig.6, the Y axis indicates the number of the acceleration tests when a breakage was observed at the bead portion and the Y axis denotes the ratio X/HR. As the ratio X/HR increased, the number of tests to breakage became large, that is the bead durability was improved.

Further, it was found that it is difficult to manufacture the tyre of which ratio X/HR is more than 1.05 and the bead portions of such a tyre did not match with the rim well. Such a tyre was therefore not subjected to the test.

As explained above, the axially inner end and the radially outer end of the bead core are in the specified ranges relative to the tim flange to make the sectional shape of the bead apex similar to that when loaded. Accordingly, the repeated deformation of the beadd apex during tyre rotating are lessened, and as a result, the bead durability is largely improved.

Further, the height of the bead apex is limited in the specified range, and the turnup portion of the carcass ply adjacent to the bead core contacts with the main portion thereof in the range L and the radially outer ends of the turnup portions of the other carcass plies ar eterminated in the contacting range L. Therefore, the stress at the turnup portions due to the tyre deformations is effectively impaired and the bead durability is enhanced.

Furthermore, the turnup portion of the carcass layer is located near the neutral line in bending of the bead portion. Accordingly, the compressive stress generated on the outer sutface of the turnup portion is reduced, and the strength of the carcass against fatigue can be increased, and the bead durability is improved.

## Claims

1. A heavy duty radial tyre comprising a pair of bead cores (2) one disposed in each bead portion of the tyre, a carcasss (7) extending between and turned up around both bead cores (2) from the axially inside to the outside thereof, the carcass (7) comprising at least one ply of parallel cords (12) arranged at 75 to 95 degress to the equatorial plane of the tyre, a belt (13) disposed radially outwardly of the carcass (7) and comprising at least two plies of cords, a pair of bead apexes (10) one disposed and extending radially outwardly of each bead core (2), wherein, in at least one of the bead portions, when the tyre is mounted on a normal rim (9) as specified and inflated to normal pressure the ratio X/HR of the axial distance X of the axially inner edge (Q2) of the bead core (2) from a bead heel point (Q1) to the height HR of the flange (9f) of said normal rim is in the range of 0.8 to 1.05, wherein said bead heel point (Q1) is defined as the intersection of an extension of the outer flange contacting surface of the bead portion with an extension of the bead base, and the ratio Y/HR of the radial distance Y from the radially outer edge (Q3) of the rim flange (9f) to the radially outer edge (Q4) of the bead core (2) to said height HR of the rim flange is in the range of 0 to 0.3.

2. A heavy duty radial tyre according to claim 1, characterised in that said carcass (7) comprises at least two plies of organic fibre cords arranged at 75 to 85 degrees to the equatorial plane of the tyre, in at least one of the bead portions, the height HB of the radially outer end (10A) of the bead apex (10) from the bead base is larger than the height HR of the flange (9f) of the rim (9) from the rim base, the height HB of the radially outer end (10A) of said bead apex (10) from the rim base being smaller than the height H1 of the lowest turnup portion (7d) of the turnup portions (7a, 7b, 7c, 7d) of the carcass plies in said carcass turnup portion, the centre of thickness N of said carcass turnup portion being located axially inwards of a straight line drawn between points P1 and P2, where the point P1 is the intersection of the centre N with the straight line L2 passing through the centre of gravity of the bead core (2) in the axial direction of the tyre, and the point P2 is the intersection of the line L1 passing through the radially outer end (Q3) of said rim flange (9f) with the line V1 passing through said point P1 and inclined axially inwardly at an angle (α) between 0 to 20 degrees with respect the radial direction of the tyre and the uppermost turnup portion (8A) of the carcass ply adjacent to the bead core (2) contacts with the carcass main portion (6) in a range L, which extends from the upper end of the apex (10) to the end of the uppermost turnup portion (8A), and the other carcass ply of plies terminate in said range L.

3. A radial tyre according to Claim 1 or 2 characterised in that the carcass (7) comprises aliphatic polyamide fibre cords with an elongation at 5 kgf tensile force applied of 5 to 8% and at 10kp tensile force applied of 9 to 12% and at breaking is not more than 28%, the said cords being coated with rubber having a modulus at 100% elongation of 30 to 100 kp/mm$^2$ and the thickness of the rubber coat being not more than 0.8mm.

4. A radial tyre according to claim 3 characterised in that the diameter of the organic fibre cords is not more than 1.2mm.

**Revendications**

1. Pneumatique à carcasse radiale pour charges élevées, comprenant deux tringles (2) disposées chacune dans une partie de talon du pneumatique, une carcasse (7) disposée entre les tringles (2) et repliée autour des tringles, de la partie axialement interne vers l'extérieur, la carcasse (7) comportant au moins une nappe de câblés (12) formant un angle de 75 à 95° par rapport au plan équatorial du pneumatique, une ceinture (13) disposée radialement vers l'extérieur de la carcasse (7) et comprenant au moins deux nappes de câblés, et deux pointes de bourrage de talon (10) disposées chacune radialement à l'extérieur d'un talon (2), dans lequel, dans l'une au moins des parties de talon, lorsque le pneumatique est monté sur une jante normale (9) telle que spécifiée et est gonflé à une pression normale, le rapport X/HR de la distance axiale X du bord axialement interne (Q2) de la tringle (2) à un point de coin de talon (Q1), à la hauteur HF du flasque (9f) de la jante normale est compris entre 0,8 et 1,05, le point de coin de talon (Q1) étant défini comme étant l'intersection du prolongement de la surface de contact du flasque externe de la partie de talon avec un prolongement de la base du talon, et le rapport Y/HR de la distance radiale Y au bord radialement externe (Q3) du flasque (9f) de la jante au bord radialement externe (Q4) de la tringle (2) à la hauteur HR du flasque de la jante est compris entre 0 et 0,3.

2. Pneumatique à carcasse radiale pour charges élevées selon la revendication 1, caractérisé en ce que la carcasse (7) comporte au moins deux nappes de câblés de fibres organiques faisant un angle de 75 à 85° avec le plan équatorial du pneumatique, dans l'une au moins des parties de talon, la hauteur HB de l'extrémité radialement externe (10A) de la pointe de bourrage de talon (10) par rapport à la base du talon est supérieure à la hauteur HR du flasque (9f) de la jante (9) par rapport à la base de la jante, la hauteur HB de l'extrémité radialement externe (10A) de la pointe de bourrage de talon (10) par rapport à la base de la jante étant inférieure à la hauteur H1 de la partie repliée la plus basse (7d) des parties repliées (7a, 7b, 7c, 7d) des nappes de carcasse dans la partie repliée de carcasse, le centre N de l'épaisseur de la partie repliée de carcasse étant placé axialement à l'intérieur d'une droite passant par des points P1 et P2, le point P1 étant l'intersection du centre N avec la droite L2 passant par le centre de gravité de la tringle (2) dans la direction axiale du pneumatique, et le point P2 étant l'intersection de l'axe L1 passant par l'extrémité radialement externe (Q3) du flasque (9f) de la jante avec la droite V1 passant par le point P1 et incliné axialement vers l'intérieur d'un angle (α) compris entre 0 et 20° par rapport à la direction radiale du pneumatique, la partie repliée supérieure (8A) de la nappe de carcasse adjacente à la tringle (2) est au contact de la partie principale de carcasse (6) dans une plage L qui est disposée de l'extrémité supérieure de la pointe de bourrage (10) jusqu'à l'extrémité de la partie repliée supérieure (8A), et l'autre ou les autres nappes de carcasse se terminent dans cette plage L.

3. Pneumatique à carcasse radiale selon la revendication 1 ou 2, caractérisé en ce que la carcasse (7) comprend des câblés de fibres d'un polyamide aliphatique ayant un allongement de 5 à 8 % lorsqu'une force de traction de 50 M (5 kgf) est appliquée et de 9 à 12 % lorsqu'une force de traction de 100 M (10 kgf) est appliquée, et étant au maximum de 28 % à la rupture, les câblés étant revêtus de caoutchouc ayant un module de $3.10^8$ à $1.10^9$ Pa (30 à 100 kgf/mm$^2$) et l'épaisseur de la couche de caout-chouc ne dépassant pas 0,8 mm.

4. Pneumatique à carcasse radiale selon la revendication 3, caractérisé en ce que le diamètre des câblés de fibres organiques ne dépasse pas 1,2 mm.

**Patentansprüche**

1. Radialreifen für hohe Beanspruchung, welcher umfaßt ein Paar Wulstkerne (2), die jeweils einzeln in den Wulstabschnitten des Reifens angeordnet sind, eine Karkasse (7), die sich zwischen den Wulstkernen erstreckt und um beide Wulstkerne (2) von axial innerhalb nach axial außerhalb derselben nach oben umgeschlagen ist, wobei die Karkasse (7) umfaßt mindestens eine Lage aus mit 75 bis 95° zur Äquatorialebene des Reifens angeordneten parallelen Korden (12), einen Gürtel (13), der radial außerhalb der Karkasse (7) angeordnet ist und mindestens zwei Kordlagen umfaßt, zwei Wulstreiter (10), die je einzeln angeordnet sind und sich radial von jedem Wulstkern (2) nach außen erstrecken, wobei in mindestens einem der Wulstabschnitte bei an einer normalen angegebenen Felge (9) angebrachtem und auf Normaldruck aufgepumptem Reifen das Verhältnis X/HR des Axialabstands X der axial inneren Kante (Q2) des Wulstkerns (2) von einer Wulstfersenstelle (Q1) zu der Höhe HR des Horns (9f) der Normalfelge im Bereich von 0,8 bis 1,05 liegt, wobei die Wulstfersenstelle (Q1) als die Überschneidung einer Verlängerung der äußeren Hornberührungsfläche des Wulstabschnitts mit einer Verlängerung des Wulstgrundes bestimmt ist, und das Verhältnis Y/HR des Radialabstandes Y von der radial äußeren Kante (Q3) des Felgenhorns (9f) zu der radial äußeren Kante (Q4) des Wulstkerns (2) zu der Höhe HR des Felgenhorns im Bereich von 0 bis 0,3 liegt.

2. Radialreifen für hohe Beanspruchung nach Anspruch 1, dadurch gekennzeichnet, daß die Karkasse (7) umfaßt mindestens zwei Lagen aus organischen Faserkorden, die mit 75 bis 85° zur Äquatorialebene des Reifens angeordnet sind, in mindestens einem der Wulstabschnitte die Höhe HB des radial äußeren Endes (10A) des Wulstreiters (10) über dem Wulstgrund größer als die Höhe HR des Horns (9f) der Felge (9) über dem Felgengrund ist, die Höhe HB des radial äußeren Endes (10A) des Wulstreiters (10) über dem Felgengrund kleiner als die Höhe H1 des untersten Umschlagabschnitts (7d) der Umschlagabschnitte (7a, 7b, 7c, 7d) der Karkasslagen in dem Karkass-Umschlagabschnitt ist, das Zentrum der Dicke (N) des Karkass-Umschlagabschnitts sich axial innerhalb einer geraden Linie befindet, die zwischen Stellen P1 und P2 gezogen ist, von denen die Stelle P1 die Überschneidung des Zentrums N mit der durch den Schwerpunkt des Wulstkerns (2) in Axialrichtung des Reifens hindurchtretenden geraden Linie L2 ist und die Stelle P2 die Überschneidung der durch das radial äußere Ende (Q3) des Felgenhorns (9f) gehenden Linie L1 mit der durch die Stelle P1 hindurchgehenden und axial nach innen mit einem Winkel ($\alpha$) zwischen 0 bis 20° bezüglich der Axialrichtung des Reifens geneigten Linie V1 ist, und der oberste Umschlagabschnitt (8A) der Karkasslage benachbart zu dem Wulstkern (2) den Karkass-Hauptabschnitt (6) in einem Bereich L berührt, der sich von dem oberen Ende des Reiters (10) bis zu dem Ende des obersten Umschlagabschnitts (8A) erstreckt, und die andere(n) Karkasslage oder -Lagen in dem Bereich L enden.

3. Radialreifen nach Anspruch 1 oder 2, dadurch gekennzeichnet, daß die Karkasse (7) aliphatische Polyamidfaserkorde mit einer Längung von 5 bis 8% bei 5 kp angelegter Zugkraft und von 9 bis 12% bei 10 kp angelegter Zugkraft und von nicht mehr als 28% bei Bruch umfaßt, wobei die Korde mit Gummi mit einem Modul bei 100% Längung von 30 bis 10 kp/mm$^2$ beschichtet sind und die Dicke der Gummischicht nicht mehr als 0,8 mm beträgt.

4. Radialreifen nach Anspruch 3, dadurch gekennzeichnet, daß der Durchmesser der organischen Faserkorde nicht mehr als 1,2 mm beträgt.

# FIG.1

# FIG.2

# FIG.3

# FIG.4

## FIG.5

# FIG.6

FIG.7